# EUROPÄISCHE PATENTANMELDUNG

(11) **EP 1 014 659 A2**
(43) Veröffentlichungstag der Anmeldung: **28.06.2000**
(21) Anmeldenummer: 99440362.4
(22) Anmeldetag: 20.12.1999
(51) Int. Cl.: H04M 3/42, H04M 1/57, H04M 3/38

(54) **Verfahren zum Feststellen der Identität eines Anrufers**

(30) Priorität: 23.12.1998 DE 19859831
(71) Anmelder: ALCATEL, 75008 Paris (FR)
(72) Erfinder: Hägerbarth, Frank, 74366 Kirchheim (DE)
(74) Vertreter: Brose, Gerhard, Dipl.-Ing.

(57) **Zusammenfassung**

Die Erfindung betrifft ein Verfahren zum Feststellen der Identität eines Anrufers mittels einer persönlichen Identifikationsnummer (PIN). Die PIN wird einer Endgerätenummer eines Endgeräts (3) des Anrufers zugeteilt und in einer Vorrichtung (1) eines Computernetzwerks gespeichert. Falls eine bestimmte Dienstleistungs-Telefonnummer (X) angerufen wird, wird der Anruf an die Vorrichtung (1) weitergeleitet. Die Vorrichtung (1) empfängt die eingegebene PIN und vergleicht sie mit der gespeicherten PIN. Falls die eingegebene PIN mit der gespeicherten PIN übereinstimmt, wird der Anruf an die ursprünglich angewählte Dienstleistungs-Telefonnummer (X) weitergeleitet.

## Beschreibung

Die vorliegende Erfindung betrifft ein Verfahren zum Feststellen der Identität eines Anrufers mittels einer persönlichen Identifikationsnummer (PIN). Die Erfindung betrifft außerdem eine Vorrichtung eines Computernetzwerks, in der eine persönliche Identifikationsnummer (PIN) gespeichert ist.

Aus dem Stand der Technik ist es bekannt, die Identität eines Anrufers mittels einer Endgerätenummer festzustellen, die dem Endgerät zugewiesen ist, das der Anrufer verwendet. Das Endgerät ist üblicherweise als ein Telefon ausgebildet. Dieses bekannte Verfahren wird insbesondere in Mobilfunknetzen eingesetzt. Genau genommen ist in den Mobilfunknetzen eine Telefonnummer nicht dem Telefon selbst, sondern einer in das Telefon eingesteckten Chipkarte, der sogenannten Subscriber Identification Module (SIM)-Karte zugewiesen. Nach dem Einschalten des Telefons wird ein Nutzer aufgefordert, eine PIN einzugeben, bevor ihm die Nutzung des Telefons gestattet wird. Die eingegebene PIN wird mit einer auf der SIM-Karte gespeicherten PIN verglichen. Stimmt die eingegebene PIN mit der PIN der SIM-Karte überein, wird dem Nutzer gestattet, das Telefon zu benutzen. Durch die Eingabe der PIN findet also eine Identifikation des Nutzers gegenüber dem Telefon statt. Aus diesem Grund ist es bei Mobiltelefonen möglich, aus der Telefonnummer, die dem Mobiltelefon bzw. der SIM-Karte zugewiesen ist, die Identität eines Anrufers festzustellen.

Im Festnetz ist es nach dem Stand der Technik dagegen nicht möglich, die Identität eines Anrufers mittels der Telefonnummer festzustellen, die dem Telefon des Anrufers zugeteilt ist. Das liegt insbesondere daran, dass sich die Nutzer eines Telefons im Festnetz in der Regel nicht gegenüber dem Telefon identifizieren müssen und dass ein Telefon im Festnetz üblicherweise von einer Vielzahl von Nutzern benutzt wird. Bei einem Telefon im Festnetz kann mit einem Anruf zwar die Telefonnummer des Telefons übermittelt werden, von dem aus der Anrufer seinen Anruf tätigt. Aus dieser Telefonnummer kann jedoch nicht die Identität des Anrufers festgestellt werden.

Aus dem Bereich der Bankgeschäfte, die über ein Telefon ausgeführt werden, des sogenannten Telebankings, ist es bekannt, die Identität eines Kunden am Telefon mittels einer persönlichen Identifikationsnummer (PIN) festzustellen. Die PIN beim Telebanking ist jedoch nicht der Telefonnummer des Anrufers zugeteilt, sondern vielmehr einer Kontonummer. Bevor ein Kunde Zugang auf ein Konto erhält, muss er die Kontonummer des gewünschten Kontos und die der Kontonummer zugewiesene PIN mittels Spracheingabe oder über die Tastatur des Telefons eingeben. Wenn die eingegebene PIN mit der PIN der Kontonummer übereinstimmt, erhält der Kunde Zugriff auf das gewünschte Konto.

Die vorliegende Erfindung schlägt nun ein Verfahren der eingangs genannten Art vor, bei dem die PIN einer Endgerätenummer des Anrufers zugeteilt und in einer Vorrichtung eines Computernetzwerks gespeichert ist, wobei das Verfahren die nachfolgenden Schritte aufweist:
- Weiterleiten eines Anrufs an die Vorrichtung, falls die Identität des Anrufers überprüft werden soll,
- Übermitteln der Endgerätenummer des Anrufers und der angewählten Endgerätenummer an die Vorrichtung,
- Empfangen der Endgerätenummer des Anrufers und der angewählten Endgerätenummer durch die Vorrichtung,
- Feststellen der PIN, die der Endgerätenummer des Anrufers zugeteilt ist, als erwartete PIN,
- Übermitteln einer Nachricht an das Endgerät des Anrufers, wobei die Nachricht den Anrufer auffordert, seine PIN einzugeben,
- Übermitteln einer durch den Anrufer eingegebenen PIN von dem Endgerät an die Vorrichtung,
- Empfangen der eingegebenen PIN durch die Vorrichtung,
- Vergleichen der eingegebenen PIN mit der erwarteten PIN, und
- Weiterleiten des Anrufs an die angewählte Endgerätenummer, falls die eingegebene PIN mit der erwarteten PIN übereinstimmt.

Durch das erfindungsgemäße Verfahren kann nun erstmals die Identität eines Anrufers mittels einer persönlichen Identifikationsnummer (PIN) im Telefon-Festnetz festgestellt werden, ohne dass der Anrufer zusätzliche Angaben, wie bspw. die Angabe der gewünschten Kontonummer beim Telebanking, machen muß. Allein aus der Endgerätenummer, insbesondere aus der Telefonnummer, des Anrufers, die zu Anfang eines Anrufs von dem Telefon zu der Vorrichtung übermittelt wird, wird die erwartete PIN ermittelt. Diese wird mit einer eingegebenen PIN verglichen, und bei einer Übereinstimmung der erwarteten PIN mit der eingegebenen PIN wird der Anruf an die angewählte Telefonnummer weitergeleitet.

Zum Feststellen der Identität eines Anrufers wird zunächst eine PIN erzeugt, bspw. durch einen Zufallsgenerator. Die PIN wird einem Nutzer zugewiesen und in Verbindung mit der Telefonnummer des Endgeräts, das der Nutzer üblicherweise verwendet, in einer Vorrichtung in einem Computernetzwerk abgespeichert. Das Computernetzwerk ist bspw. als ein sogenanntes Intelligentes Netzwerk (IN) ausgebildet. Die Vorrichtung ist bspw. als ein Computer, insbesondere als ein sog. Service Control Point (SCP), in dem Intelligenten Netzwerk ausgebildet. Das Endgerät des Nutzers ist üblicherweise als ein Telefon ausgebildet; es kann jedoch auch als ein Computer o. ä. ausgebildet sein. Die PIN und die Telefonnummer des Nutzers sind bspw. in einer Datenbank des SCP abgespeichert.

Wenn ein Anrufer nun eine bestimmte Dienstleistung über das Telefon anfordert, indem er die Telefonnummer dieser Dienstleistung anwählt, wird die Identität des Anrufers festgestellt. Eine Dienstleistung, bei der die PIN überprüft wird, ist bspw. das Einkaufen von Waren über das Telefon, das sogenannte Teleshopping, oder das Beantragen bestimmter Telekommunikations-Dienstleistungen über das Telefon. Zum Feststellen der Identität des Anrufers wird der Anruf über einen sog. Service Switching Point (SSP) an den SCP weitergeleitet. Der SCP empfängt die Telefonnummer des Telefons des Anrufers und die angewählte Telefonnummer der gewünschten Dienstleistung. Aus der Datenbank des SCP wird die zu der Telefonnummer des Anrufers gehörende PIN ermittelt, die auch als erwartete PIN bezeichnet wird. Der SCP fordert den Nutzer mittels einer Nachricht auf, seine PIN einzugeben. Die Eingabe der PIN kann bspw. mittels einer automatischen Spracherkennung durch den SCP erfolgen. Es ist auch denkbar, dass die PIN mittels sog. Dual Tone Multi Frequency (DTMF)-Signalen von dem Telefon des Anrufers an den SCP übermittelt wird. Falls die eingegebene PIN mit der erwarteten PIN übereinstimmt, leitet der SCP den Anruf zu der gewünschten Dienstleistung weiter, die der Anrufer ursprünglich angewählt hat.

Gemäß einer vorteilhaften Weiterbildung der Erfindung wird vorgeschlagen, dass die Nachricht an das Endgerät des Anrufers, mit der der Anrufer aufgefordert wird, seine PIN einzugeben, als eine Sprachnachricht ausgebildet ist. Der Anrufer empfängt die Sprachnachricht über den Hörer seines Telefons. Alternativ oder zusätzlich wäre es möglich, die Nachricht an solche Endgeräte, die eine Anzeigeeinheit aufweisen, als eine Textnachricht zu übermitteln, die auf der Anzeigeeinheit angezeigt wird.

Gemäß einer bevorzugten Ausführungsform der Erfindung wird vorgeschlagen, dass der Endgerätenummer des Anrufers mehrere PINs zugeteilt werden. Diese Ausführungsform hat den Vorteil, dass ein Endgerät von mehreren berechtigten Nutzern eingesetzt werden kann. Jedem der Nutzer ist eine eigene PIN zugewiesen. Der SCP lädt alle PINs, die einer Telefonnummer zugewiesen sind, aus der Datenbank, und überprüft, ob die von dem Anrufer eingegebene PIN zumindest mit einer dieser PINs übereinstimmt. Ist dies der Fall, gilt der Anrufer als berechtigt. Aus der eingegebenen PIN kann der SCP auch die Identität des Anrufers feststellen.

Gemäß einer bevorzugten Weiterbildung der'Erfindung wird vorgeschlagen, dass die PINs, die der Endgerätenummer des Anrufers zugeteilt und in der Vorrichtung des Computernetzwerks gespeichert sind, durch den Anrufer geändert werden. Dazu muss der Anrufer die Möglichkeit haben, über eine besondere Dienstleistungs-Telefonnummer auf die Vorrichtung, in der die PINs gespeichert sind, zuzugreifen. Wie bei der Eingabe der PIN zum Feststellen der Identität des Anrufers, kann eine PIN zum Ändern auch mittels Spracheingabe oder mittels DTMF-Signalen an die Vorrichtung übermittelt werden. Die geänderte PIN wird dann wieder in der Vorrichtung des Computernetzwerks gespeichert.

Gemäß der vorliegenden Erfindung wird auch eine Vorrichtung der eingangs genannten Art vorgeschlagen, in der eine persönliche Identifikationsnummer (PIN) gespeichert ist, die einem Endgerät eines Anrufers zugeteilt ist, wobei die Vorrichtung aufweist:
- Mittel zum Empfangen der Endgerätenummer des Anrufers und der angewählten Endgerätenummer,
- Mittel zum Feststellen der PIN, die der Endgerätenummer des Anrufers zugeteilt ist, als erwartete PIN,
- Mittel zum Übermitteln einer Nachricht an das Endgerät des Anrufers, wobei die Nachricht den Anrufer auffordert, seine PIN einzugeben,
- Mittel zum Empfangen der eingegebenen PIN,
- Mittel zum Vergleichen der eingegebenen PIN mit der erwarteten PIN, und
- Mittel zum Weiterleiten des Anrufs an die angewählte Endgerätenummer, falls die eingegebene PIN mit der erwarteten PIN übereinstimmt.

Die erfindungsgemäße Vorrichtung ist Teil eines Computernetzwerks. Das Computernetzwerk ist vorteilhafterweise als ein sogenanntes Intelligentes Netzwerk (IN) ausgebildet. Die erfindungsgemäße Vorrichtung ist vorzugsweise als ein Service Control Point (SCP) des Intelligenten Netzwerkes ausgebildet. Die Vorrichtung weist vorzugsweise eine Datenbank auf, in der die PIN und die dazugehörige Endgerätenummer abgespeichert sind. Das Endgerät des Anrufers ist vorzugsweise als ein Telefon ausgebildet.

Gemäß einer vorteilhaften Weiterbildung der Erfindung wird vorgeschlagen, dass einem Endgerät mehrere PINs zugeteilt sind, die in der Vorrichtung gespeichert sind.

Ein bevorzugtes Ausführungsbeispiel der vorliegenden Erfindung wird im Folgenden anhand der Zeichnung näher erläutert. Es zeigt:

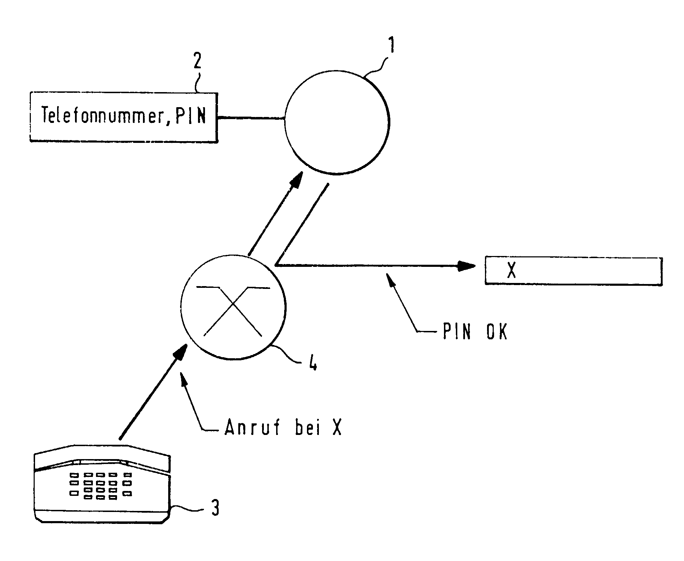

- Figur 1: ein Struktogramm eines erfindungsgemäßen Verfahrens gemäß einer bevorzugten Ausführungsform.

In Fig. 1 ist ein Struktogramm eines erfindungsgemäßen Verfahrens zum Feststellen der Identität eines Anrufers gemäß einer bevorzugten Ausführungsform dargestellt. Zum Feststellen der Identität des Anrufers wird eine persönliche Identifikationsnummer (PIN) verwendet. Die PIN wird bspw. mittels eines Zufallsgenerators erzeugt, einem bestimmten Nutzer zugeteilt und in Verbindung mit der Telefonnummer eines Endgeräts in einer Vorrichtung 1 eines Computernetzwerks gespeichert. Genauer gesagt, ist die PIN zusammen mit der Telefonnummer eines Endgeräts 3 des Anrufers in einer Datenbank 2 der Vorrichtung 1 gespeichert. Das Computernetzwerk ist vorzugsweise als ein sogenanntes Intelligentes Netzwerk (IN) ausgebildet. Die Vorrichtung 1 ist als ein sogenannter Service Control Point (SCP) ausgebildet.

Wenn nun ein Nutzer von seinem Endgerät 3 aus eine bestimmte Dienstleistung X anfordert, wählt er an seinem Endgerät 3 die Telefonnummer der Dienstleistung X. Diese Dienstleistung X kann bspw. das Einkaufen von Waren über das Telefon (das sogenannte Teleshopping) sein. Falls der Nutzer die Telefonnummer einer solchen Dienstleistung X anwählt, wird der Anruf durch einen sog. Service Switching Point 4 (SSP) an die Vorrichtung 1 weitergeleitet. Mit dem Anruf wird die angewählte Telefonnummer der Dienstleistung X und die Endgerätenummer des Endgeräts 3 übermittelt. Die Vorrichtung 1 ermittelt anhand der Telefonnummer des Endgeräts 3 die entsprechende in der Datenbank 2 gespeicherte PIN. Die PIN aus der Datenbank 2 wird als sogenannte erwartete PIN bezeichnet. Die Vorrichtung 1 übermittelt dann eine Nachricht an das Endgerät 3 des Anrufers, mit der es den Anrufer auffordert, seine PIN einzugeben. Die Nachricht kann eine Sprachnachricht oder eine Textnachricht sein. Der Anrufer gibt dann seine PIN über das Endgerät 3 ein. Die Eingabe der PIN kann bspw. mittels Sprachsteuerung oder mittels sog. Dual Tone Multi Frequency (DTMF)-Signale erfolgen. Die eingegebene PIN wird von dem Endgerät 3 an die Vorrichtung 1 übermittelt. Falls die empfangene PIN mit der erwarteten PIN, die in der Datenbank 2 der Vorrichtung 1 gespeichert ist, übereinstimmt, leitet die Vorrichtung 1 den Anruf an die angewählte Telefonnummer der Dienstleistung X weiter.

Der Nutzer kann über sein Endgerät 3 auf die Vorrichtung 1 zugreifen, um die in der Datenbank 2 gespeicherte PIN zu bearbeiten. Das Ändern der PIN wird wie eine Dienstleistung behandelt, auf die der Anrufer über eine bestimmte Telefonnummer Zugriff hat. Wenn der Anrufer die Telefonnummer wählt, um die in der Datenbank 2 gespeicherte PIN zu ändern, wird der Anruf zunächst an die Vorrichtung 1 weitergeleitet, durch die dann die Identität bzw. die Zugangsberechtigung des Anrufers festgestellt wird. Wenn die Identität des Anrufers festgestellt wurde, wird der Anruf von der Vorrichtung 1 an die Dienstleistung des Änderns der gespeicherten PIN weitergeleitet.

Des weiteren ist es möglich, dass für zusätzliche Nutzer des Endgeräts 3 zusätzliche PINs in der Datenbank 2 der Vorrichtung 1 gespeichert sind, die allesamt der Endgerätenummer des Endgeräts 3 zugeordnet sind.

## Patentansprüche

1. Verfahren zum Festellen der Identität eines Anrufers mittels einer persönlichen Identifikationsnummer (PIN), **dadurch gekennzeichnet,** dass die PIN einer Endgerätenummer des Anrufers zugeteilt und in einer Vorrichtung eines Computernetzwerks gespeichert ist, wobei das Verfahren die nachfolgenden Schritte aufweist:
- Weiterleiten eines Anrufs an die Vorrichtung, falls die Identität des Anrufers überprüft werden soll,
- Übermitteln der Endgerätenummer des Anrufers und der angewählten Endgerätenummer an die Vorrichtung,
- Empfangen der Endgerätenummer des Anrufers und der angewählten Endgerätenummer durch die Vorrichtung,
- Festellen der PIN, die der Endgerätenummer des Anrufers zugeteilt ist, als erwartete PIN,
- Übermitteln einer Nachricht an das Endgerät des Anrufers, wobei die Nachricht den Anrufer auffordert, seine PIN einzugeben,
- Übermitteln einer durch den Anrufer eingegebenen PIN von dem Endgerät an die Vorrichtung,
- Empfangen der eingegebenen PIN durch die Vorrichtung,
- Vergleichen der eingegebenen PIN mit der erwarteten PIN, und
- Weiterleiten des Anrufs an die angewählte Endgerätenummer, falls die eingegebene PIN mit der erwarteten PIN übereinstimmt.

2. Verfahren nach Anspruch 1, dadurch gekennzeichnet, dass die Nachricht an das Endgerät des Anrufers, mit der der Anrufer aufgefordert wird, seine PIN einzugeben, als eine Sprachnachricht ausgebildet ist.

3. Verfahren nach Anspruch 1 oder 2, dadurch gekennzeichnet, dass der Endgerätenummer des Anrufers mehrere PINs zugeteilt werden.

4. Verfahren nach einem der Ansprüche 1 bis 3, dadurch gekennzeichnet, dass die PINs, die der Endgerätenummer des Anrufers zugeteilt und in der Vorrichtung des Computernetzwerks gespeichert sind, durch den Anrufer geändert werden.

5. Vorrichtung eines Computernetzwerks, in der eine persönliche Identifikationsnummer (PIN) gespeichert ist, **dadurch gekennzeichnet**, dass die PIN einem Endgerät eines Anrufers zugeteilt ist, wobei die Vorrichtung aufweist:
- Mittel zum Empfangen der Endgerätenummer des Anrufers und der angewählten Endgerätenummer,
- Mittel zum Festellen der PIN, die der Endgerätenummer des Anrufers zugeteilt ist, als erwartete PIN,
- Mittel zum Übermitteln einer Nachricht an das Endgerät des Anrufers, wobei die Nachricht den Anrufer auffordert, seine PIN einzugeben,
- Mittel zum Empfangen der eingegebenen PIN,
- Mittel zum Vergleichen der eingegebenen PIN mit der erwarteten PIN, und
- Mittel zum Weiterleiten des Anrufs an die angewählte Endgerätenummer, falls die eingegebene PIN mit der erwarteten PIN übereinstimmt.

6. Vorrichtung nach Anspruch 5, dadurch gekennzeichnet, dass dem Endgerät des Anrufers mehrere PINs zugeteilt sind, die in der Vorrichtung gespeichert sind.
